# EUROPÄISCHE PATENTSCHRIFT

(11) **EP 2 797 786 B1**
(45) Veröffentlichungstag und Bekanntmachung des Hinweises auf die Patenterteilung: **17.08.2016**
(21) Anmeldenummer: 12810217.5
(22) Anmeldetag: 18.12.2012
(51) Int. Cl.: B60S 1/38

(54) **WISCHVORRICHTUNG ZUM REINIGEN VON FAHRZEUGSCHEIBEN**
WIPER DEVICE FOR CLEANING VEHICLE WINDOWS
WISCHVORRICHTUNG ZUM REINIGEN VON FAHRZEUGSCHEIBEN

(30) Priorität: 29.12.2011 DE 102011057118
(43) Veröffentlichungstag der Anmeldung: 05.11.2014
(73) Patentinhaber: Valeo Systèmes d'Essuyage, 78321 Le Mesnil Saint Denis (FR)
(72) Erfinder: EGNER-WALTER, Bruno, 74076 Heilbronn (DE); SCHAEUBLE, Michael, 71665 Vaihingen/Enz (DE)
(74) Vertreter: Callu Danseux, Violaine
(86) Internationale Anmeldenummer: PCT/EP2012/075923
(87) Internationale Veröffentlichungsnummer: WO 2013/098120

(56) Entgegenhaltungen:
- WO-A1-2012/065699
- WO-A1-2012/089415
- DE-A1-102009 059 119
- US-A1- 2011 047 742

## Beschreibung

### Stand der Technik

Die Erfindung betrifft eine Wischvorrichtung zum Reinigen von Fahrzeugscheiben nach dem Oberbegriff des Anspruchs 1.

Eine derartige Wischvorrichtung siehe DE-A-10 2009059119 ist aus der Praxis bereits bekannt. Bei der bekannten Wischvorrichtung ist der Verbindungsbereich des Wischarms zu einem Wischblatt von einem Sicherungselement überdeckt, das längsverschiebbar am Wischarm angeordnet ist. Der Wischarm weist im Wesentlichen senkrecht zur Wischarmlängsachse ausgebildete Ausnehmungen, z.B. in Form von Schlitzenauf, die mit entsprechenden Vorsprüngen zusammenwirken, die an einem Wischblattadapter des Wischblatts ausgebildet sind. Ferner weist der Wischblattadapter Haltebereiche auf, die mit am Sicherungselement ausgebildeten, nach innen ragenden Halteabschnitten zusammenwirken. Bei der Montage eines Wischblatts am Wischarm ist es erforderlich, das Sicherungselement zunächst in einer Montagestellung zu positionieren, damit der Wischblattadapter mit seinen Vorsprüngen in die erwähnten Ausnehmungen bzw. Schlitze des Wischarms eingeführt werden kann. Sobald dies erfolgt ist, kann das Sicherungselement in eine zweite Endposition in Längsrichtung des Wischarms verschoben werden, so dass die Halteabschnitte des Sicherungselements die Haltebereiche des Wischblattadapters übergreifen und somit das Wischblatt in einer Ebene senkrecht zur Wischblattlängsrichtung am Wischarm fixieren.

Nachteilig bei der aus der Praxis bekannten Wischvorrichtung ist es, dass das Zusammenführen des Wischblatts mit dem Wischarm im Bereich des Wischblattadapters in der angesprochenen Montagestellung des Sicherungselements einen freien Blick auf den unterhalb des Sicherungselements angeordneten Bereich des Wischarms verhindert. Dadurch ist es für einen Bediener erforderlich, das Wischblatt mit dem Wischblattadapter ohne direkten Blickkontakt mit dem Wischarm zu verbinden bzw. zusammenzufügen, was vom Anwender als bedienungsunfreundlich empfunden wird.

### Offenbarung der Erfindung

Ausgehend von dem dargestellten Stand der Technik liegt der Erfindung die Aufgabe zugrunde, eine Wischvorrichtung nach dem Oberbegriff des Anspruchs 1 derart weiterzubilden, dass für einen Anwender bei einem Wischblattwechsel ein vereinfachtes Handling erzielt wird. Dies wird erfindungsgemäß bei einer Wischvorrichtung zum Reinigen von Fahrzeugscheiben mit den Merkmalen des Anspruchs 1 dadurch gelöst, dass das Sicherungselement zusätzlich zu seiner Längsverschiebbarkeit schwenkbar am Wischarm angeordnet ist. Durch die schwenkbare Anordnung des Sicherungselements am Wischarm wird die Möglichkeit geschaffen, zur Montage des Wischblatts am Wischarm das Sicherungselement in eine Stellung zu schwenken, bei der der Verbindungsbereich zwischen dem Wischarm und dem Wischblattadapter von außen für einen Anwender erkennbar ist. Dadurch wird die korrekte Positionierung des Wischblatts bzw. des Wischblattadapters zum Wischarm stark vereinfacht.

Vorteilhafte Weiterbildungen der erfindungsgemäßen Wischvorrichtung zum Reinigen von Fahrzeugscheiben sind in den Unteransprüchen aufgeführt. In den Rahmen der Erfindung fallen sämtliche Kombinationen aus zumindest zwei von in den Ansprüchen, der Beschreibung und/oder den Figuren offenbarten Merkmalen.

Zur Realisierung der Schwenkbarkeit des Sicherungselements am Wischarm ist es in einer konstruktiv bevorzugten Ausgestaltung der Erfindung vorgesehen, dass das Sicherungselement in Richtung zum Wischarm ragende Fortsätze aufweist, die in jeweils eine als Längsschlitz im Wischarm ausgebildete Führung eingreifen.

Ganz besonders bevorzugt bei der zuletzt genannten Variante ist, wenn die Fortsätze auf der dem Wischarm zugewandten Seite Abschnitte haben, deren Querschnitt größer ist sind als die Breite der Längsschlitze, und wenn die Längsschlitze Erweiterungen zum Einführen der Abschnitte aufweisen, deren Querschnitt dem Querschnitt der Abschnitte angepasst sind. Dadurch wird einerseits beim Hersteller der Wischvorrichtung eine einfache Montage des Sicherungselements am Wischarm ermöglicht, und darüber hinaus wird vermieden, dass während des normalen Betriebs sich das Sicherungselement, z.B. durch äußere Krafteinwirkungen, wie sie beispielsweise beim Durchfahren einer Waschanlage auftreten, vom Wischarm löst.

Um zu vermeiden, dass ein Bediener versehentlich das Sicherungselement von dem Wischarm entfernt, ist es darüber hinaus vorgesehen, dass die Abschnitte der Fortsätze lediglich in einer bestimmten Winkelstellung des Sicherungselements in die Erweiterungen des Wischarms einführbar sind.

Um den Bediener eindeutig die unterschiedlichen Längspositionen des Sicherungselements zu signalisieren, ist es darüber hinaus vorgesehen, dass am Sicherungselement und/oder am Wischblattadapter wenigstens ein Anschlagselement angeordnet ist, das eine Verschiebung des Sicherungselements in Längs- bzw. Montagerichtung begrenzt. Dadurch wird für den Bediener haptisch erkennbar, wenn der Montagevorgang abgeschlossen ist bzw. wenn das Sicherungselement sich in der das Wischblatt am Wischarm fixierenden Stellung befindet.

Zur Montageerleichterung bzw. zur Reduzierung der Kräfte beim Verschieben des Sicherungselements, besonders wenn dieses beispielsweise aufgrund von Nässe schwer zu fassen ist, wird vorgeschlagen, dass das Sicherungselement an seinen Seitenwänden Verrippungen aufweist.

Weitere Vorteile, Merkmale und Einzelheiten der Erfindung ergeben sich aus der nachfolgenden Beschreibung bevorzugter Ausführungsbeispiele sowie anhand der Zeichnung.

Diese zeigt in:
- Fig. 1: eine vereinfachte Darstellung eine Scheibenwischvorrichtung zum Reinigen einer Fahrzeugscheibe,
- Fig. 2 und Fig. 3: den Wischblattadapter eines Wischblatts im Verbindungsbereich zu einem Wischarm während der Montage des Wischblatts am Wischarm jeweils in Seitenansicht,
- Fig. 4 und Fig. 5: den Verriegelungsvorgang eines Wischblattadapters am Wischarm während unterschiedlicher Stellungen eines Sicherungselements in Seitenansicht,
- Fig. 6 und Fig. 7: perspektivische Ansichten auf den Verbindungsbereich zwischen dem Wischblattadapter und dem Wischarm,
- Fig. 8: einen Schnitt in der Ebene VIII-VIII der Fig. 5 und
- Fig. 9: einen Schnitt in der Ebene IX-IX der Fig. 5.

Gleiche Bauteile bzw. Bauteile mit gleicher Funktion sind in den Figuren mit den gleichen Bezugsziffern versehen.

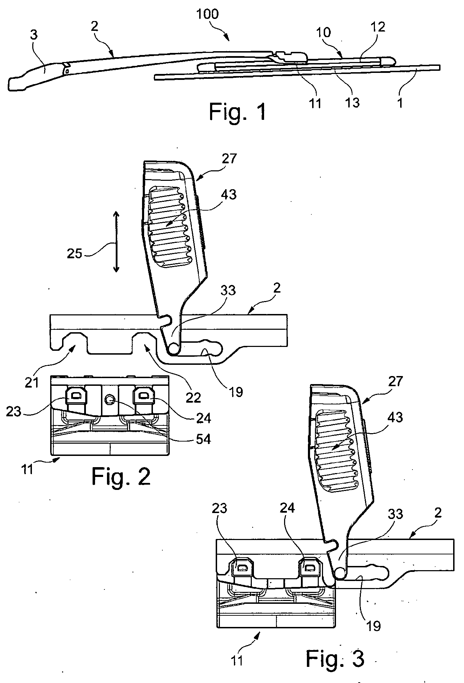

In der Fig. 1 ist eine erfindungsgemäße Wischvorrichtung 100 zum Reinigen einer Fahrzeugscheibe 1 dargestellt. Die Wischvorrichtung 100 umfasst ein an einem Wischarm 2 auswechselbar befestigtes Wischblatt 10. Hierbei weist das Wischblatt 10 einen Wischblattadapter 11 auf, der zur Ankopplung des Wischblatts 10 an den Wischarm 2 dient, und der einen langgestreckten Wischblattkörper 12 hält. Der Wischblattkörper 12 ist mittels einer Wischlippe 13 in Anlagekontakt mit der Fahrzeugscheibe 1 angeordnet.

Das Wischblatt 10 kann als sogenanntes "Aqua-Blade-Wischblatt" ausgebildet sein, d.h., dass das Wischblatt 10 im Wischblattkörper 12 angeordnete Sprühöffnungen zum Aufbringen einer Waschflüssigkeit auf die Fahrzeugscheibe 1 aufweist. Darüber hinaus kann das Wischblatt 10 auch als beheizbares Wischblatt 10 ausgebildet sein. Bevorzugt ist jedoch eine Ausgestaltung des Wischblatts 10, bei der dieses weder über eine Aqua-Blade-Funktion, noch über eine Heizfunktion verfügt.

Wie am Besten aus einer Zusammenschau der Fig. 2 und Fig. 6 bis Fig. 8 hervorgeht, ist der Wischblattadapter 11 bzw. das Wischblatt 10 an dem einen, einem Wischarmgelenk 3 abgewandten Endbereich des Wischarms 2 befestigt. Der Wischarm 2 ist als Stanz-/Biegeteil aus Blech ausgebildet und weist im Verbindungsbereich mit dem Wischblatt 10 einen im Wesentlichen U-förmigen Querschnitt mit zwei Seitenwänden 16, 17 und einer oberen Wand 18 auf und umgreift den Wischblattadapter 11. Ferner erkennt man je einen in jeder Seitenwand 16, 17 ausgebildeten Längsschlitz 19, 20 sowie in jeder Seitenwand 16, 17 zwei axial zueinander beabstandete, senkrecht zur Wischblattlängsachse ausgebildete Aufnahmeschlitze 21, 22 zur formschlüssigen Aufnahme von als Fortsätzen 23, 24 ausgebildeten Haltebereichen des Wischblattadapters 11. Die Befestigung bzw. das Lösen des Wischblatts 10 vom Wischarm 2 erfolgt dabei gemäß Fig. 2 in Richtung des Doppelpfeils 25.

An dem Wischarm 2 ist ein vorzugsweise aus Kunststoff im Spritzgussverfahren ausgebildetes Sicherungselement 27 schwenkbar befestigt. Hierbei beträgt der Schwenkwinkel, bezogen auf die Längsrichtung des Wischarms 2 im Verbindungsbereich mit dem Wischblatt 10 wenigstens 90°, vorzugsweise in etwa 180°. Das Sicherungselement 27 ist in Form einer Abdeckhaube mit zwei Seitenwänden 28, 29, einer oberen Begrenzungswand 31 und einer stirnseitig angeordneten, als Anschlagselement wirkenden Vorderwand 32 ausgebildet. Auf der der Vorderwand 32 gegenüberliegenden Seite ist jede der beiden Seitenwände 28, 29 mit einem Befestigungsabschnitt 33, 34 verlängert ausgebildet, der einen zapfenförmigen Fortsatz 35, 36 aufweist.

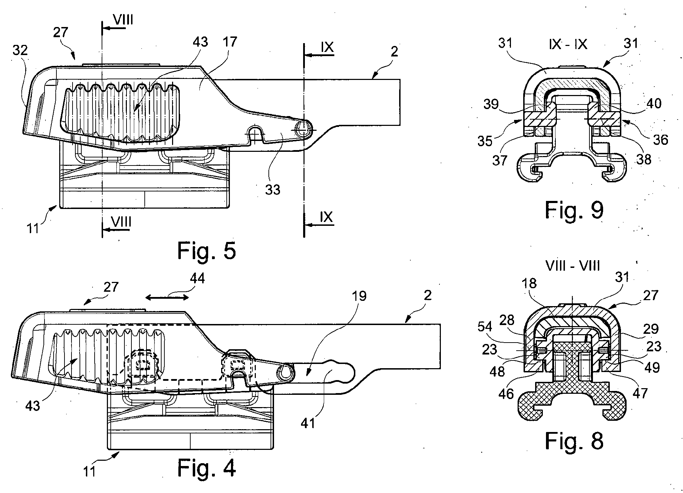

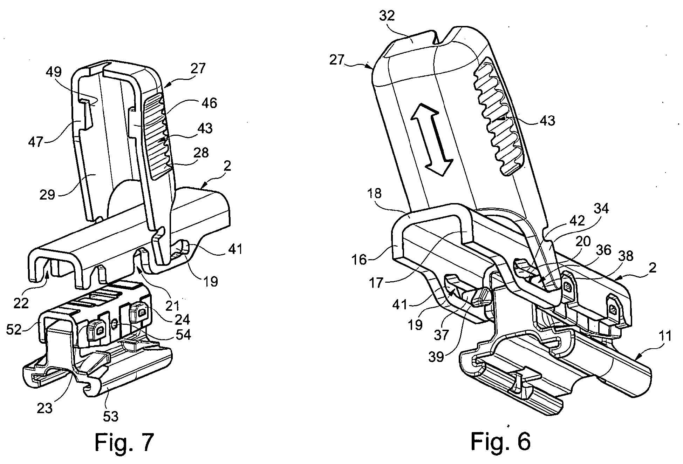

Die Fortsätze 35, 36 greifen in den jeweiligen Längsschlitz 19, 20 der Seitenwand 16, 17 des Wischarms 2 ein. Wie man ferner anhand der Fig. 6 und Fig. 9 erkennt, weist jeder Fortsatz 35, 36 einen zylindrischen Abschnitt 37, 38 und einen nockenförmigen Abschnitt 39, 40 auf. Ferner erkannt man, dass die Schlitzbreite des Längsschlitzes 19, 20 dem Durchmesser des zylindrischen Abschnitts 37, 38 angepasst ist. Zusätzlich weist jeder der beiden Längsschlitze 19, 20 eine der Form des nockenförmigen Abschnitts 39, 40 angepasste Erweiterung 41, 42 auf, so dass ein Einführen der Fortsätze 35, 36 in die Längsschlitze 19, 20 nur im Bereich der Erweiterungen 41, 42, speziell nur bei einer bestimmten Winkelstellung des Sicherungselements 27, möglich ist.

An den beiden Seitenwänden 28, 29 des Sicherungselements 27 sind jeweils Vertiefungen ausgebildet, die eine Verrippung 43 ausbilden, die als Bedienhilfe für einen Anwender ein Bewegen des Sicherungselements 27 in Richtung des Doppelpfeils 44 (Fig. 4) erleichtern. An den beiden Seitenwänden 28, 29 des Sicherungselements 27 sind weiterhin auf der der oberen Begrenzungswand 31 abgewandten Seite nach innen ragende, in Längsrichtung keilförmig ausgebildete Halteabschnitte 46, 47 einstückig am Sicherungselement 27 angeformt (Fig. 7). Diese Halteabschnitte 46, 47 wirken mit ihren Oberseiten 48, 49 in einer Fixierstellung des Wischblatts 10 bzw. des Wischblattadapters 11 am Wischarm 2 mit den einen Fortsätzen 23 am Wischblattadapter 11 zusammen, an deren Unterseite die Oberseiten 48, 49 der Halteabschnitte 46, 47 anliegen können.

Die Fortsätze 23, 24 sind an einem wischarmseitigen Adapterelement 52 angeordnet, das im Querschnitt im Wesentlichen U-förmig ausgebildet ist und das ein wischblattseitiges Adapterelement 53 umgreift, wobei die beiden Adapterelemente 52, 53 insgesamt dem Wischblattadapter 11 ausbilden und in einer Drehachse 54 schwenkbar zueinander angeordnet sind.

Die Montage eines Wischblatts 10 am Wischarm 2 geschieht wie folgt: Zunächst wird das Sicherungselement 27 entsprechend der Fig. 3 in eine in etwa senkrecht zum Verbindungsbereich des Wischarms 2 befindliche Position geschwenkt. Hierbei befindet sich das Sicherungselement 27 bzw. die beiden Befestigungsabschnitte 33, 34 mit den Fortsätzen 35, 36 in der dem Wischarmgelenk 3 abgewandten Endlage. In dieser Position sind insbesondere die beiden Aufnahmeschlitze 21, 22 des Wischarms 2 im Bereich der beiden Seitenwände 16, 17 für einen Anwender gut erkennbar, d.h. sie sind von dem Sicherungselement 27 nicht verdeckt, so dass es dem Anwender einfach ermöglich ist, das Wischblatt 10 bzw. den Wischblattadapter 11 in Richtung des Doppelpfeils 25 mit dem Wischarm 2 zu verbinden, indem die Fortsätze 23, 24 in die Längsschlitze 19, 20 eingeführt werden. Dieser Zustand ist in der Fig. 3 dargestellt.

Anschließend wird das Sicherungselement 27 entsprechend der Fig. 4 in die mit dem Wischarm 2 ausgerichtete Position um 90° geschwenkt und anschließend entsprechend der Fig. 5 in Richtung des Wischarmgelenks 3 verschoben, so dass dieses mit den Fortsätzen 35, 36 in den dem Wischarmgelenk 3 zugewandten Endbereichen der beiden Längsschlitze 19, 20 anliegt. Beim Verschieben des Sicherungselements 27 in Richtung zum Wischarmgelenk 3 gelangen die Halteabschnitte 46, 47 des Sicherungselements 27 mit ihren Oberseiten 48, 49 in Wirkverbindung mit den Unterseiten der einen Fortsätze 23 des Wischblattadapters 11 und fixieren den Wischblattadapter 11 bzw. das Wischblatt 10 in einer Richtung senkrecht zur Wischblattlängsrichtung bzw. zum Wischarm 2 (Fig. 8). Ferner ist das Wischblatt 10 durch die in den Aufnahmeschlitzen 21, 22 angeordneten Fortsätze 23, 24 auch in Längsrichtung zum Wischarm 2 positioniert, so dass das Wischblatt 10 insgesamt am Wischarm 2 fixiert aufgenommen ist.

Zur Demontage des Wischblatts 10 vom Wischarm 2 werden die beschriebenen Montageschritte lediglich in umgekehrter Reihenfolge ausgeführt.

Die soweit beschriebene Wischvorrichtung 100 kann in vielfältiger Art und Weise abgewandelt bzw. modifiziert werden, ohne vom Erfindungsgedanken abzuweichen. Dieser besteht in der Verwendung eines an dem Wischarm 2 schwenkbar angeordneten Sicherungselements 27, das es einem Anwender ermöglicht, zur Montage eines Wischblatts 10 am Wischarm 2 den Verbindungsbereich gut zu erkennen, um eine problemlose Positionierung des Wischblatts 10 zum Wischarm 2 vornehmen zu können.

### Bezugszeichenliste

- 1: Fahrzeugscheibe
- 2: Wischarm
- 3: Wischarmgelenk
- 10: Wischblatt
- 11: Wischblattadapter
- 12: Wischblattkörper
- 13: Wischlippe
- 16: Seitenwand
- 17: Seitenwand
- 18: obere Wand
- 19: Längsschlitz
- 20: Längsschlitz
- 21: Aufnahmeschlitz
- 22: Aufnahmeschlitz
- 23: Fortsatz
- 24: Fortsatz
- 25: Doppelpfeil
- 27: Sicherungselement
- 28: Seitenwand
- 29: Seitenwand
- 31: Begrenzungswand
- 32: Vorderwand
- 33: Befestigungsabschnitt
- 34: Befestigungsabschnitt
- 35: Fortsatz
- 36: Fortsatz
- 37: zylindrischer Abschnitt
- 38: zylindrischer Abschnitt
- 39: nockenförmiger Abschnitt
- 40: nockenförmiger Abschnitt
- 41: Erweiterung
- 42: Erweiterung
- 43: Verrippung
- 44: Doppelpfeil
- 46: Halteabschnitt
- 47: Halteabschnitt
- 48: Oberseite
- 49: Oberseite
- 52: wischarmseitiges Adapterelement
- 53: wischblattseitiges Adapterelement
- 54: Drehachse

- 100: Scheibenwischvorrichtung

## Patentansprüche

1. Wischvorrichtung (100) zum Reinigen von Fahrzeugscheiben (1), mit einem an einem Wischarm (2) austauschbar befestigten Wischblatt (10), das über einen Wischblattadapter (11) mit dem Wischarm (2) verbunden ist, wobei der Wischarm (2) im Befestigungsbereich mit dem Wischblatt (10) einen im Wesentlichen U-förmigen Querschnitt aufweist, der den Wischblattadapter (11) umgreift, wobei am Wischarm (2) im Verbindungsbereich ein in Längsrichtung des Wischarms (2) beweglich angeordnetes Sicherungselement (27) für den Wischblattadapter (11) vorgesehen ist, das den Wischarm (2) im Verbindungsbereich zumindest bereichsweise überdeckt und einen im Wesentlichen U-förmigen Querschnitt mit in Richtung zum Wischblattadapter (11) nach innen ragenden Halteabschnitten (46, 47) aufweist, die in einer Montagestellung, in der sich das Sicherungselement (27) in einer ersten Stellung befindet, außer Kontakt mit an dem Wischblattadapter (11) ausgebildeten Haltebereichen (23) sind, und wobei zum Fixieren des Wischblattadapters (11) am Wischarm (2) das Sicherungselement (27) in eine zweite Stellung bewegbar ist, in der die Halteabschnitte (46, 47) des Sicherungselements (27) die Haltebereiche (23) am Wischblattadapter (11) hintergreifen,
**dadurch gekennzeichnet,**
**dass** das Sicherungselement (27) zusätzlich zu seiner Längsverschiebbarkeit schwenkbar am Wischarm (2) angeordnet ist.

2. Wischvorrichtung nach Anspruch 1,
**dadurch gekennzeichnet,**
**dass** das Sicherungselement (27) in Richtung zum Wischarm (2) ragende Fortsätze (35, 36) aufweist, die in jeweils eine als Längsschlitz (19, 20) im Wischarm (2) ausgebildete Führung eingreifen.

3. Wischvorrichtung nach Anspruch 2,
**dadurch gekennzeichnet,**
**dass** die Fortsätze (35, 36) auf der dem Wischarm (2) zugewandten Seite Abschnitte (39, 40) haben, deren Querschnitt größer ist sind als die Breite der Längsschlitze (19, 20), und dass die Längsschlitze (19, 20) Erweiterungen (41, 42) zum Einführen der Abschnitte (39, 40) aufweisen, deren Querschnitt dem Querschnitt der Abschnitte (39, 40) angepasst sind.

4. Wischvorrichtung nach Anspruch 3,
**dadurch gekennzeichnet,**
**dass** die Abschnitte (39, 40) lediglich in einer bestimmten Winkelstellung des Sicherungselements (27) in die Erweiterungen (41, 42) des Wischarms (2) einführbar sind.

5. Wischvorrichtung nach einem der Ansprüche 1 bis 4,
**dadurch gekennzeichnet,**
**dass** am Wischblattadapter (11) seitlich nach außen ragende Haltebereiche (23, 24) ausgebildet sind, die mit am Wischarm (2) ausgebildeten, senkrecht zur Wischblattlängsrichtung angeordneten Ausnehmungen, vorzugsweise Aufnahmeschlitzen (21, 22), zusammenwirken und dadurch das Wischblatt (10) in Längsrichtung zum Wischarm (2) fixieren.

6. Wischvorrichtung nach einem der Ansprüche 1 bis 5,
**dadurch gekennzeichnet,**
**dass** der Schwenkwinkel des Sicherungselements (27) am Wischarm (2) wenigstens 90°, bezogen auf die Wischarmlängsachse, beträgt.

7. Wischvorrichtung nach einem der Ansprüche 1 bis 6,
**dadurch gekennzeichnet,**
**dass** am Sicherungselement (27) und/oder am Wischblattadapter (11) wenigstens ein Anschlagelement angeordnet ist, das eine Verschiebung des Sicherungselements (27) in Längsrichtung des Wischarms (2) begrenzt.

8. Wischvorrichtung nach einem der Ansprüche 2 bis 7,
**dadurch gekennzeichnet,**
**dass** die Fortsätze (35, 36) auf der einem Wischarmgelenk (3) zugewandten Seite am Sicherungselement (27) angeordnet sind.

9. Wischvorrichtung nach einem der Ansprüche 2 bis 8,
**dadurch gekennzeichnet,**
**dass** das Sicherungselement (27) aus Kunststoff besteht, als Spritzgußteil ausgebildet ist und auf der den Fortsätzen (35, 36) gegenüberliegenden Seite eine vordere Querwand (31) aufweist, die als Anschlag wirkt.

10. Wischvorrichtung nach Anspruch 9,
**dadurch gekennzeichnet,**
**dass** das Sicherungselement (27) an seinen Seitenwänden (28, 29) Verrippungen (43) aufweist.

## Claims

1. Wiper device (100) for the cleaning of vehicle windows (1), with a wiper blade (10) fastened exchangeably on a wiper arm (2), which wiper blade is connected with the wiper arm (2) via a wiper blade adapter (11), wherein in the fastening region to the wiper blade (10) the wiper arm (2) has a substantially U-shaped cross section, which embraces the wiper blade adapter (11), wherein on the wiper arm (2) in the connecting region a securing element (27) for the wiper blade adapter (11) is provided which is movably arranged in the longitudinal direction of the wiper arm (2) and which at least partially overlaps the wiper arm (2) in the connecting region and has a substantially U-shaped cross section with holding sections (46, 47) projecting inwards in the direction towards the wiper blade adapter (11), which holding sections, in a mounting position in which the securing element (27) is situated in a first position, are out of contact with holding regions (23) constructed on the wiper blade adapter (11), and wherein, for fixing the wiper blade adapter (11) on the wiper arm (2), the securing element (27) is movable into a second position in which the holding sections (46, 47) of the securing element (27) engage behind the holding regions (23) on the wiper blade adapter (11),
**characterized in that**
in addition to its longitudinal displacement, the securing element (27) is arranged pivotably on the wiper arm (2).

2. Wiper device according to Claim 1, **characterized in that** the securing element (27) has extensions (35, 36) projecting in the direction towards the wiper arm (2), which engage into in each case one guide constructed as a longitudinal slit (19, 20) in the wiper arm (2).

3. Wiper device according to Claim 2, **characterized in that**, on the side facing the wiper arm (2), the extensions (35, 36) have sections (39, 40), the cross sections of which are larger than the width of the longitudinal slits (19, 20), and that the longitudinal slits (19, 20) have widenings (41, 42) for the introduction of the sections (39, 40), the cross sections of which widenings are adapted to the cross section of the sections (39, 40).

4. Wiper device according to Claim 3, **characterized in that** the sections (39, 40) can be inserted into the widenings (41, 42) of the wiper arm (2) only when the securing element (27) is in a certain angle position.

5. Wiper device according to one of Claims 1 to 4, **characterized in that** laterally outwardly projecting holding regions (23, 24) are constructed on the wiper blade adapter (11), which holding regions interact with recesses, preferably mounting slits (21, 22), constructed on the wiper arm (2) and arranged perpendicularly to the longitudinal direction of the wiper blade, and thereby fix the wiper blade (10) to the wiper arm (2) in the longitudinal direction.

6. Wiper device according to one of Claims 1 to 5, **characterized in that** the pivoting angle of the securing element (27) on the wiper arm (2) is at least 90° in relation to longitudinal axis of the wiper arm.

7. Wiper device according to one of Claims 1 to 6, **characterized in that**, on the securing element (27) and/or on the wiper blade adapter (11), there is arranged at least one stop element which delimits a displacement of the securing element (27) in the longitudinal direction of the wiper arm (2).

8. Wiper device according to one of Claims 2 to 7, **characterized in that** the extensions (35, 36) are arranged on the securing element (27) on the side facing a wiper arm joint (3).

9. Wiper device according to one of Claims 2 to 8, **characterized in that** the securing element (27) consists of plastic, is constructed as an injection moulded part and, on the side lying opposite the extensions (35, 36), has a front transverse wall (31) which acts as a stop.

10. Wiper device according to Claim 9, **characterized in that** the securing element (27) has ribs (43) on its side walls (28, 29).

## Revendications

1. Essuie-glace (100) pour nettoyer des vitres de véhicule (1), avec un balai d'essuie-glace (10) fixé de façon amovible à un bras d'essuyage (2) relié au bras d'essuyage (2) via un adaptateur de balai d'essuie-glace (11), le bras d'essuyage (2) comportant, dans la zone de fixation au balai d'essuie-glace (10), une section transversale pour l'essentiel en forme de U encerclant l'adaptateur de balai d'essuie-glace (11), un élément de sécurité (27) disposé de façon mobile dans la direction longitudinale du bras d'essuyage (2) étant prévu pour l'adaptateur de balai d'essuie-glace (11) au niveau du bras d'essuyage (2) dans la zone de jonction, ledit élément recouvrant au moins en partie le bras d'essuyage (2) dans la zone de jonction et comportant une section transversale pour l'essentiel en forme de U avec des sections de maintien (46, 47) saillant vers l'intérieur en direction de l'adaptateur de balai d'essuie-glace (11), lesdites sections étant, dans une position de montage dans laquelle l'élément de sécurité (27) se trouve dans une première position, hors de contact avec les zones de maintien (23) réalisées au niveau de l'adaptateur de balai d'essuie-glace (11) et l'élément de sécurité (27) pouvant être déplacé dans une deuxième position dans laquelle les sections de maintien (46, 47) de l'élément de sécurité (27) engagent par derrière les zones de maintien (23) au niveau de l'adaptateur de balai d'essuie-glace (11) pour fixer l'adaptateur de balai d'essuie-glace (11) au bras d'essuyage (2), **caractérisé en ce que** l'élément de sécurité (27) est en outre disposé, pour pouvoir coulisser dans le sens de la longueur, de façon à pouvoir pivoter au niveau du bras d'essuyage (2).

2. Essuie-glace selon la revendication 1, **caractérisé en ce que** l'élément de sécurité (27) comporte en direction du bras d'essuyage (2) des prolongements (35, 36) saillants s'engageant dans respectivement un guide réalisé sous la forme d'une fente longitudinale (19, 20) dans le bras d'essuyage (2).

3. Essuie-glace selon la revendication 2, **caractérisé en ce que** les prolongements (35, 36) ont, sur le côté orienté vers le bras d'essuyage (2), des sections (39, 40) dont la section transversale est plus grande que la largeur des fentes longitudinales (19, 20) et que les fentes longitudinales (19, 20) comportent des élargissements (41, 42) pour introduire les sections (39, 40) dont la section transversale est adaptée à la section transversale des sections (39, 40).

4. Essuie-glace selon la revendication 3, **caractérisé en ce que** les sections (39, 40) peuvent seulement être introduites dans une position angulaire définie de l'élément de sécurité (27) dans les élargissements (41, 42) du bras d'essuyage (2).

5. Essuie-glace selon l'une quelconque des revendications 1 à 4, **caractérisé en ce que** des zones de maintien (23, 24) saillant en côté vers l'extérieur sont réalisées au niveau de l'adaptateur de balai d'essuie-glace (11), lesdites zones interagissant avec des évidements, de préférence des fentes réceptrices (21, 22), réalisés au niveau du bras d'essuyage (2) et disposés perpendiculairement à la direction longitudinale de balai d'essuie-glace, fixant ainsi le balai d'essuie-glace (10) dans la direction longitudinale par rapport au bras d'essuyage (2).

6. Essuie-glace selon l'une quelconque des revendications 1 à 5, **caractérisé en ce que** l'angle de pivotement de l'élément de sécurité (27) est, au niveau du bras d'essuyage (2), d'au moins 90°, par rapport à l'axe longitudinal de bras d'essuyage.

7. Essuie-glace selon l'une quelconque des revendications 1 à 6, **caractérisé en ce qu'**au moins un élément de butée est disposé au niveau de l'élément de sécurité (27) et/ou au niveau de l'adaptateur de balai d'essuie-glace (11), ledit élément délimitant un coulissement de l'élément de sécurité (27) dans la direction longitudinale du bras d'essuyage (2).

8. Essuie-glace selon l'une quelconque des revendications 2 à 7, **caractérisé en ce que** les prolongements (35, 36) sont disposés sur le côté orienté vers une articulation de bras d'essuyage (3) au niveau de l'élément de sécurité (27).

9. Essuie-glace selon l'une quelconque des revendications 2 à 8, **caractérisé en ce que** l'élément de sécurité (27) est en matière plastique, qu'il est réalisé sous la forme d'une pièce moulée par injection et comporte, sur le côté opposé aux prolongements (35, 36), une paroi transversale avant (31) servant de butée.

10. Essuie-glace selon la revendication 9, **caractérisé en ce que** l'élément de sécurité (27) comporte des nervures (43) au niveau de ses parois latérales (28, 29).
